# EUROPEAN PATENT APPLICATION

(11) **EP 3 470 204 A1**
(43) Date of publication of application: **17.04.2019**
(21) Application number: 17196292.1
(22) Date of filing: 13.10.2017
(51) Int. Cl.: B29C 51/18, B29C 51/26, B29C 51/10

(54) **ADJUSTABLE DIMENSIONAL FRAME FOR A THERMOFORMING MACHINE AND ADJUSTMENT METHOD**

(71) Applicant: Cannon Ergos S.p.A., 21042 Caronno Pertusella (VA) (IT)
(72) Inventor: BELCASTRO, Raffaele, 21042 Caronno Pertusella (VA) (IT); VOLPATO, Marco, 21042 Caronno Pertusella (VA) (IT)
(74) Representative: Botti, Mario

(57) **Abstract**

Frame for thermoforming machine, defining an adjustable-size working window (2) for a thermoformable sheet, the frame (1) comprises at least one edge member (3). The edge member (3) comprises: at least one first sliding member (4, 4b, 4c) and at least one second sliding member (5) sliding with respect to at least one first sliding member (4, 4b, 4c) in order to adjust a length of the edge member (3). The edge member (3) has a support surface for the thermoformable sheet. The first sliding member (4) comprises a plurality of grooves (7, 7b) which are parallel to each other and aligned relative to the length of the edge member (3). The second sliding member (5) comprises a respective plurality of blade inserts (8, 8b) parallel to each other and aligned with respect to the length of the edge member (3), The plurality of blade inserts (8, 8b) are respectively inserted slidably inside the plurality of grooves (7), in order to adjust the length of the edge member (3), The plurality of grooves (7, 7b) and the plurality of blade inserts (8, 8b) define a flat configuration of the support surface.The invention also relates to a method for adjusting the dimensions of a working window (2) of a frame (1) for a thermoforming machine operating with thermoformable sheets.

## Description

### Technical field

The present invention relates to a frame for a sheet of thermoformable material. Such a support frame defines a window which may be suitably adjusted depending on the dimensions of the sheet to be thermoformed.

The invention also relates to a method for adjusting the dimensions of a working window of a frame for a thermoforming machine operating with thermoformable sheets.

In general, the present invention applies in the sector of thermoforming machines, working together with the material heating systems, the pneumatic system for forming a vacuum during the deep drawing of the sheet, and the mold, defining the desired specific shape for each desired application.

### Prior art

The thermoforming of plastics is a production technique which is already widely known and used. In fact, this technique allows to mold components even with very small thicknesses, resulting in a significant reduction in the production time compared to the other production techniques, and with an optimum ratio in terms of quantity and quality of the components produced.

The thermoforming process provides the arrangement of a sheet of plastic material on a support frame, heating of the sheet, subsequent deep drawing and positioning of the heated sheet on a mold. Finally, the formation of a vacuum by means of a pneumatic system allows the sheet to assume the shape of the mold and therefore of the desired component.

For the thermoforming process it is often necessary to form components with different dimensions and consequently differently sized molds need to be used.

For this reason, in order to avoid having to replace, depending on the component to be thermoformed, the support frame so that it is compatible with the size of the plastic sheet, support frames with dimensions which can be varied by means of different adjustment mechanisms have been devised.

For example, EP 1 876 011 A2 describes a system with the four sides of the working window which are movable, comprising four central plates along each side of the working window and four corner plates at the corners of the working window. Central plates and corner plates slide relative to each other in parallel planes, in the manner of a "drawer", allowing adjustment of the size of the working window.

Another solution is disclosed in EP 0 882 566 B1 which describes a system with four plates movable by means of a system of rods on which the plates may slide along two parallel planes.

A further solution is disclosed by EP 2 465 664 B1 which describes a system with three movable plates and a fixed window edge inside, wherein the plates are slidably supported in parallel planes.

Despite the fact that the systems according to the prior art allow adjustment of the size of the working window, there is the drawback that the working window is defined by sides which are not exactly coplanar with each other and this does not allow a perfect vacuum-tight seal between the sheet and the mold.

Furthermore, in some solutions of the prior art, the adjustment plates of the working window slide on top of each other, causing a rubbing action on sealing elements located along the edges of the window. This rubbing action is not contemplated in the design of the sealing elements. Consequently, there is a structural and performance deterioration of these sealing elements, and they must be replaced more frequently than in the case where they are subject to only compressive forces as per their design specification.

A solution which differently uses four coplanar plates is described in EP 0 692 365 B1 which illustrates four plates with dovetail recesses and ribs along two orthogonal edges, for guiding the sliding movement.

However, this solution offers limited adjustment ranges for the window and therefore requires providing several adjustment systems for the various necessary window ranges.

The object of the present invention, therefore, is to overcome the problems present in the prior art.

A particular object of the present invention is to provide a frame on which a thermoformable sheet rests, said frame being adjustable along both the directions which define the plane of the working window and which allows a correct vacuum-tight seal during thermoforming.

A further particular object of the present invention is to provide a movement of the frame which is such that it does not undermine the functioning of the sealing elements.

Another object is that of allowing a very precise dimensional adjustment of the window, therefore allowing the frame to be used in a wide adjustment range and in a substantially continuous manner within this range.

Another object is to provide a working position of an operator with respect to the working window which is always optimal.

Finally, an object is to provide a system which may be easily integrated within the already existing thermoforming machines.

### Summary of the invention

The solution idea forming the basis of the present invention is that of providing a frame with adjustable dimensions, which providing a flat support surface for the sheet to be thermoformed so as to ensure a perfect vacuum-tight seal during thermoforming.

The aforementioned technical problem is solved by means of a frame for a thermoforming machine which comprises at least one edge member with an adjustable length, in accordance with that defined by the accompanying claims which form an integral part of the present description.

The edge member comprises at least one first sliding member and at least one second sliding member sliding relative to the first sliding member. The first sliding member comprises a plurality of grooves which are parallel to each other and aligned relative to the length of the edge member. The second sliding member comprises respectively a plurality of parallel-blade inserts aligned with the length of the edge member. The lengthwise adjustment of the edge member is obtained therefore by slidably inserting the plurality of blade inserts inside the plurality of grooves.

The top surfaces of the first and second sliding members define, therefore, a support surface for the thermoformable sheet, having a flat configuration.

In this way the support surface is adapted to cooperate more effectively with a covering member of similar size which ensures a perfect vacuum-tight seal with the thermoformable sheet, for any adjusted length of the edge member.

According to a preferred aspect of the invention, the frame further comprises a reduction plate and two side plates situated laterally with respect to the edge member and defining the area of the working window. In particular, the two side plates are coplanar with the aforementioned edge member, so as to ensure the planarity of the support surface of the window.

Furthermore, in a still more preferred embodiment, the frame according to the invention provides a second edge member with fixed length, opposite to the edge member with adjustable length. This second edge member is coplanar with the edge member with adjustable length and the side plates, so as to ensure also the planarity of the support surface of the whole window.

Preferably, the second edge member with fixed length forms the side of the working window directed towards an operator in order to facilitate working of the operator.

According to a still more particular aspect the frame also comprises at least one connection member connected to the second sliding member. This connection member provides a vertical portion, perpendicular to the support surface, configured to abut with an edge of said thermoformable sheet and a horizontal portion connected to the reduction plate.

In a preferred embodiment the edge member further comprises at its ends at least two sliding lugs which are inserted inside respective sliding guides on the edges of the side plates.

Movement of the reduction plate, which is connected to the edge member, is therefore possible by means of sliding of the sliding lugs inside the respective sliding guides. Preferably, the lugs are T-shaped and the guides are correspondingly shaped.

The invention also relates to a thermoforming machine with an adjustable-size working window for a thermoformable sheet, wherein at least one edge member of said window has a variable length and forms a perimetral support surface for the thermoformable sheet; such a machine incorporates a frame with the abovementioned characteristics. It should also be noted that such a machine comprises a movable frame device with panels operated by motor-driven means towards and away from each other; said panels being operated so as to be raised, moved closer and then lowered onto at least the side edges of the thermoformable sheet.

Advantageously, the aforementioned panels are made of a composite material.

The invention also relates to a method for adjusting the dimensions of a working window of a frame for a thermoforming machine operating with thermoformable sheets, wherein the frame comprises at least one edge member of said window with a variable length and having a perimetral support surface for the thermoformable sheets, characterized by providing a telescopic extension or contraction of said edge member by means of at least one coupling between a plurality of grooves, which are parallel to each other, of a first sliding member of said edge member and a respective plurality of blade inserts respectively inserted slidably inside said plurality of grooves, in order to adjust said length of said edge member defining a flat configuration of said support surface.

Further features and advantages of the frame and the method according to the present invention will emerge more clearly from the detailed description provided hereinbelow of preferred, non-limiting, embodiments and by the dependent claims which define preferred and particularly advantageous embodiments of the invention.

### Brief description of the drawings

The invention is illustrated with reference to the following figures, provided by way of a non-limiting example, in which:
- Figure 1 shows an overall view of a frame for a thermoforming machine according to a first embodiment of the present invention.
- Figure 2 shows an enlarged view of the edge member according to Figure 1.
- Figure 3 shows a perspective view of a sliding member according to the invention.
- Figure 4 shows a perspective view of a further sliding member according to the invention.
- Figure 5 shows a perspective view of an edge member according to the present invention, in the open configuration, without covering member.
- Figure 6 shows a perspective view of the edge member of Figure 5, in the closed configuration.
- Figure 7 shows a particular perspective view of sliding members, coupled together, according to the invention.
- Figure 8 shows a further perspective view of sliding members, coupled together, according to the invention.
- Figure 9 shows a perspective view of a sliding member connected to a connection member and to a reduction plate, according to the invention.
- Figure 10 shows an overall view of a frame for a thermoforming machine according to a second embodiment of the present invention, in the closed configuration.
- Figure 11 shows a further perspective view of the frame of Figure 10, in the open configuration.
- Figure 12 shows a schematic view of a thermoforming machine, comprising a frame according to the invention.

In the different figures, similar parts will be identified by the same reference numbers.

### Detailed description

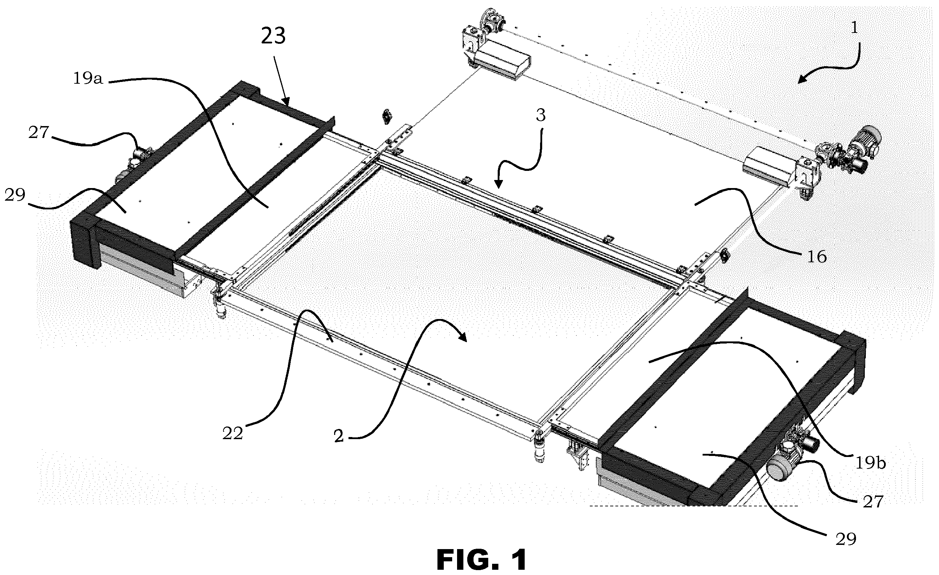

With particular reference to Figure 1, 1 denotes overall and in schematic form a frame for a thermoforming machine carried out according to the present invention.

The frame 1 defines a working window 2, which corresponds to the area of a sheet to be thermoformed (not shown). In order to adapt, therefore, the area of the working window 2 to the area of the sheet, the frame 1 comprises at least one edge member 3.

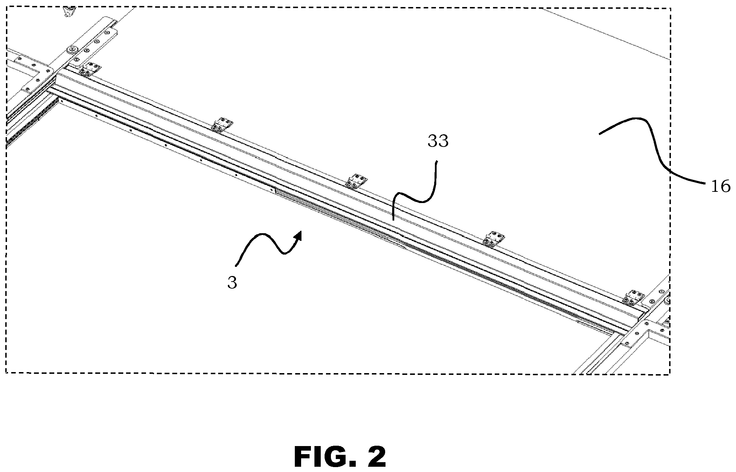

Figure 2 shows in greater detail the edge member 3, which comprises a covering member 33 positioned on top of it and of similar size, which acts as a lid.

The covering member 33 allows to recreate a perfect continuous surface between the edge member 3 and the thermoformable sheet. The covering member 33 may be formed in one piece or by means of sheets contiguous to each other. More particularly, this covering member 33 may be made by a single plastic sheet or metal sheet, without this limiting in any way the rights claimed by the Applicant.

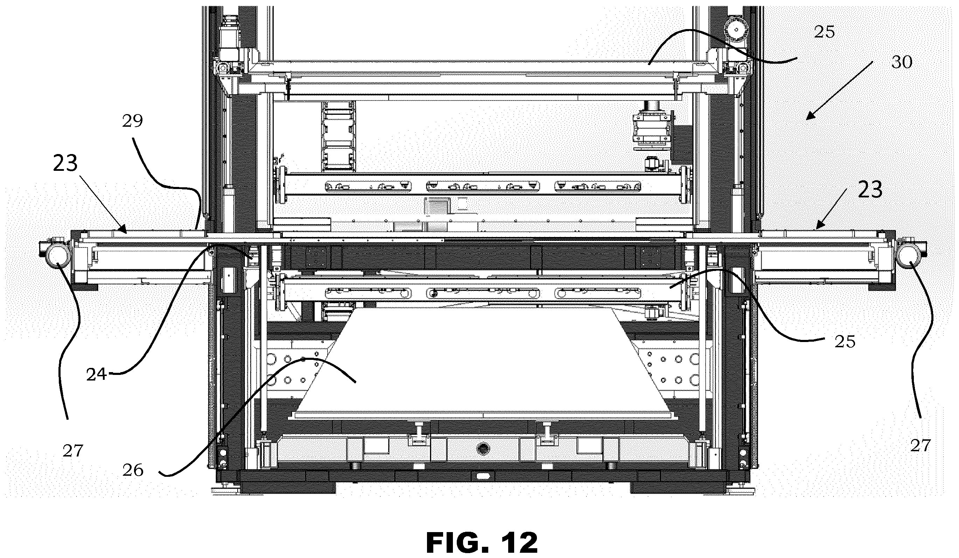

Still more particularly, the covering member 33 is configured to cooperate with a movable frame device 23 visible in Figure 12, comprised in the thermoforming system, said device, when acting on the continuous surface of the covering member 33, being pneumatically lifted and acting as a frame for the sliding of composite-material plates so as to ensure a perfect vacuum-tight seal during the sheet thermoforming process, for any adjusted length of the edge member 3.

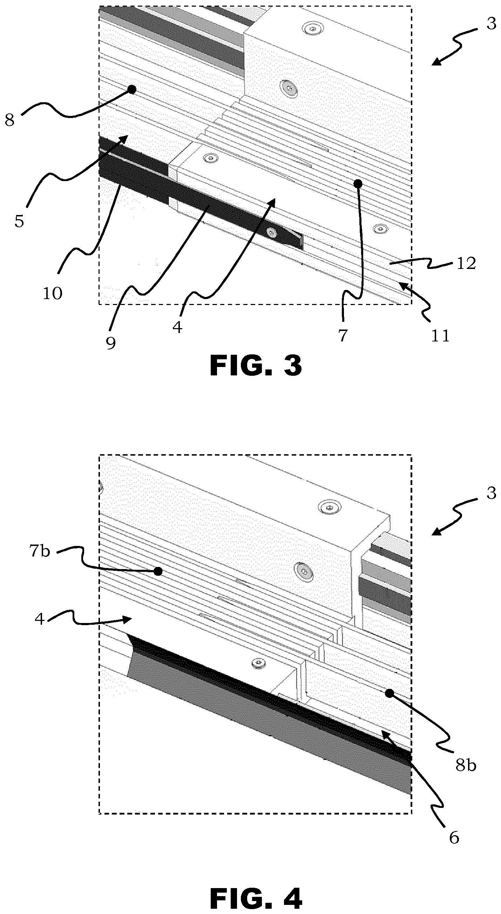

Figures 3 and 4 show the edge member 3 with the covering member 33 removed, so as to visualize more clearly the means for adjusting the length of the edge member 3.

As can be seen, the edge member 3 comprises at least one sliding member 4, and at least one sliding member 5, slidable relative to the sliding member 4. In this way it is possible to adjust the length of the edge member 3. The sliding member 4 and the sliding member 5 form a support surface of the edge member 3 for the thermoformable sheet. The term "support surface" is not to be understood as meaning a surface on which the thermoformable sheet rests directly, but an element configured in a flat manner and adapted to allow the thermoformable sheet to be supported, in particular resting on top of the covering member 33 described above, which is arranged between sheet and support surface.

The sliding member 4 comprises a plurality of grooves 7 parallel to each other and aligned with respect to the length of the edge member 3. Correspondingly the sliding member 5 comprises a plurality of blade inserts 8 parallel to each other and aligned with respect to the length of the edge member 3. The blade inserts 8 are adapted to be slidably inserted inside the grooves 7, defining with them a flat configuration for the support surface of the edge member 3. In order to obtain this flat configuration, the plurality of grooves 7 and the plurality of blade inserts 8 are, in particular, formed so as to have a substantially similar height or size.

For a simpler constructional design in the present embodiment a plurality of grooves 7 and a respective plurality of blade inserts with a rectangular cross-section are provided. This is not limiting, and members with different cross-sections compatible with each other could be used. For example, inserts and corresponding grooves with a rhombus-like cross-section could be used in order to ensure a more sure retain of the inserts inside the grooves, even if the manufacturing is more complex.

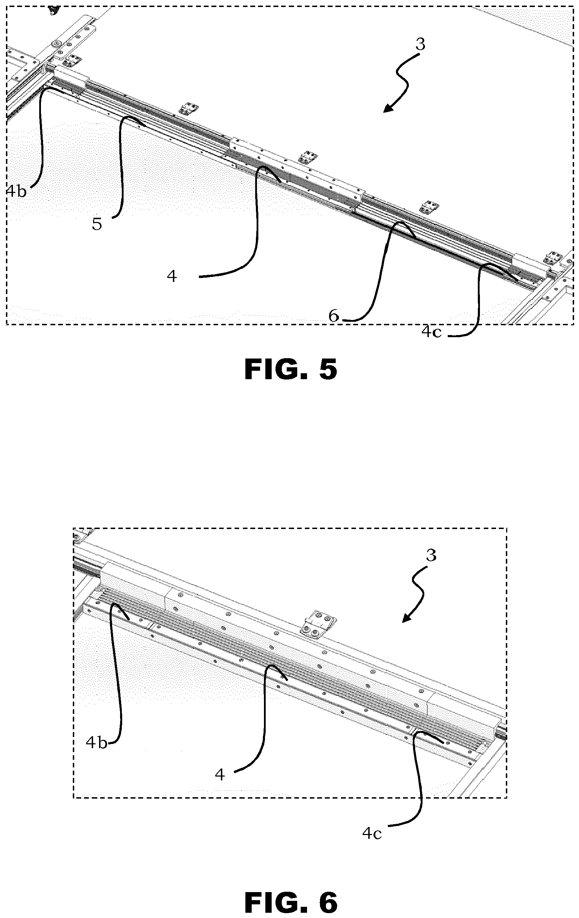

In a preferred embodiment, shown in Figures 5 and 6, the edge member 3 comprises a central sliding member 4 and two lateral sliding members 4b and 4c. Furthermore, the edge member 3 comprises a sliding member 6, similar to the sliding member 5, with a plurality of blade inserts 8b.

The central sliding member 4 provides, therefore, furthermore a plurality of grooves 7b alternating with the plurality of grooves 7. Therefore, the plurality of blade inserts 8b is slidably inserted inside the corresponding plurality of grooves 7b, in a similar manner to that described above for the plurality of blade inserts 8 and the plurality of grooves 7. In this way the edge member 3 defines a double configuration for length adjustment, with blade inserts 8 and 8b inserted alternately inside the respective grooves 7 and 7b. Also in this case the plurality of grooves 7b and the plurality of blade inserts 8b are formed so as to have a height substantially the same as each other, to obtain an overall support surface with a flat configuration, in particular in a such a way that the edge member 3 cooperates more effectively with the covering member 33 described above, improving the vacuum-tight seal thereof, for any adjusted length of the edge member 3.

It is possible to note in Figure 5 the edge member 3 in an "open" configuration, namely with the plurality of blade inserts 8 and the plurality of blade inserts 8b almost entirely outside of the respective plurality of grooves 7 and 7b, obtaining the maximum length of the edge member 3. Clearly, in the "open" configuration also, a portion of the plurality of blade inserts 8 and 8b, appropriately sized, remains inside the plurality of grooves 7 and 7b so as to maintain the mechanical connection and withstand the stresses to which the support surface of the edge member 3 is subject.

It is respectively possible to note in Figure 6 the edge member 3 in a "closed" configuration, namely with the plurality of blade inserts 8 and 8b fully inserted inside the respective plurality of grooves 7 and 7b. Clearly, the length of the edge member 3, in this configuration, corresponds to the sum of the lengths of the three sliding members 4, 4b and 4c.

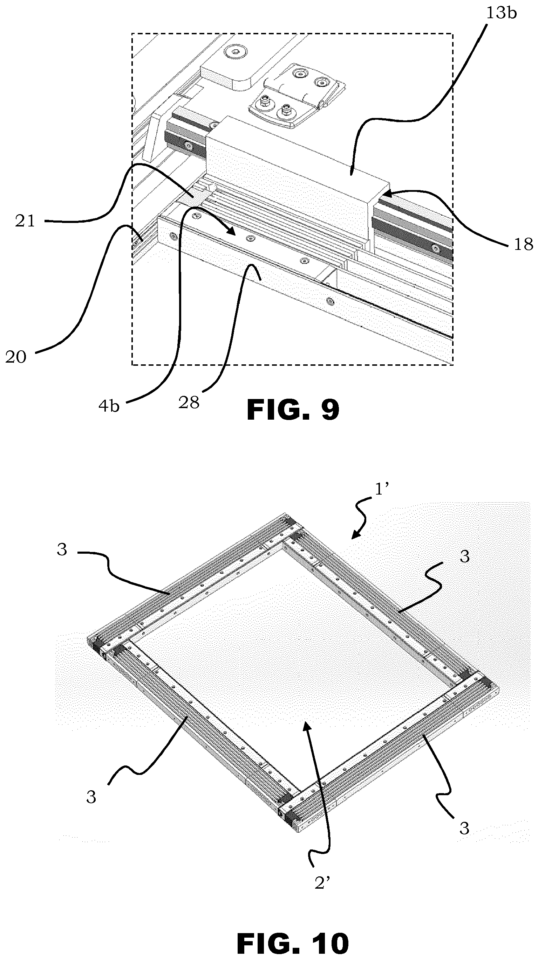

Considering Figure 3 again, the frame 1 further comprises an alignment member 9 at a side wall of one of the sliding member 4 and the sliding member 5. In the embodiment shown here, the alignment member 9 is placed at a side wall 10 of the sliding member 5. Correspondingly, a housing 11 is provided at a side wall of the other one of the sliding member 4 and the sliding member 5. In the embodiment shown here, the housing 11 is provided at a side wall 12 of the sliding member 4. The alignment member 9 is slidably inserted inside the respective housing 11 so as to constrain to bending the sliding member 4 with respect to the sliding member 5, in the direction of the length of the edge member 3. In other words, the alignment member 9 inside the respective housing 11 ensures resistance to bending/ torsional stresses to which the edge member 3 may be subject, preventing moreover any possibility for the plurality of blade inserts 8 and 8b coming out of the seats of the respective grooves 7 and 7b. An elongated retaining strip 28 is preferably provided so as to keep the alignment member 9 seated inside the respective housing 11, as clearly shown in Figure 9.

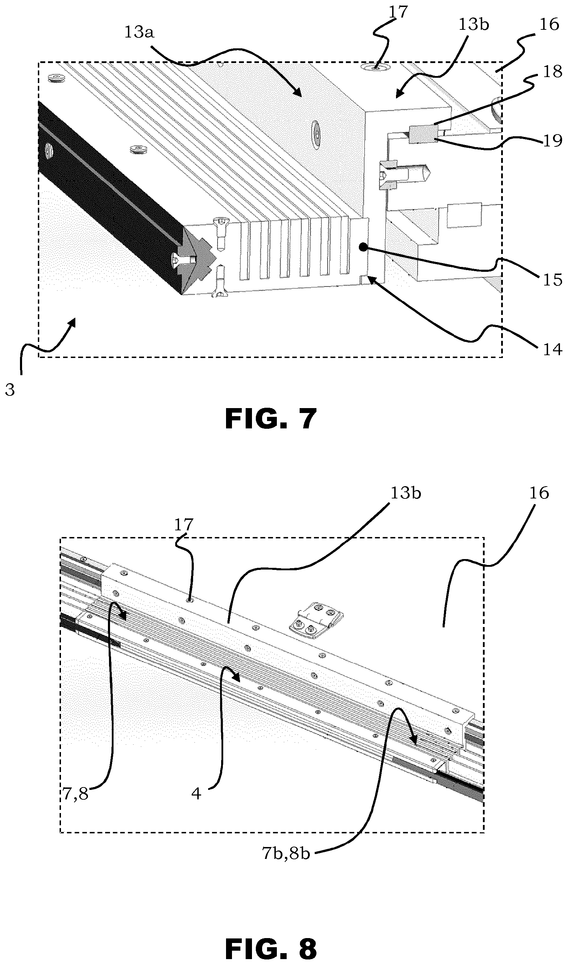

The frame 1 provides, furthermore, as visible in Figure 7, an at least one connection member 13a and 13b connected to the sliding member 4. This connection member comprises a vertical portion 13a, perpendicular to the support surface, and configured to abut with an edge of the thermoformable sheet (not shown). The vertical portion 13a of the connection member 13a, 13b is connected to the sliding member 4 by positive engagement. The vertical portion 13a is in fact provided with a recess 14 perfectly coinciding with a respective projecting portion 15 of the sliding member 4. For a simpler constructional design, in the present embodiment the recess 14 and the projecting portion 15 have a rectangular cross-section. This is not limiting, and members with different cross-sections compatible with each other could be used.

Adjoining the vertical portion 13a, the connection member 13 has a horizontal portion 13b.

As can be seen in Figure 1, the frame 1 further comprises at least one reduction plate 16 for the working window 2, adapted to reduce the working window 2 in a transversal direction, in the plane, to the length of the edge member 3. Considering Figure 7 again, this reduction plate 16 is connected to the horizontal portion 13b of the connection member 13a, 13b.

Furthermore, the horizontal portion 13b comprises a sliding seat 18 which extends in the direction of the length of the edge member 3, which slides on a respective projecting bar 19 provided on the reduction plate 16, during adjustment of the length of the edge member 3.

In the embodiment shown in Figures 7 and 8, in particular, the horizontal portion 13b of the central sliding member 4 is connected to the reduction plate 16 by means of bolts 17 both on the vertical portion 13a and on the horizontal portion 13b.

The connection members 13a, 13b of the first lateral sliding members 4b slide instead within the sliding seat 18 at the horizontal portion 13b, on the projecting bar 19 of the reduction plate 16.

It can be understood that in the present description the terms "vertical" and "horizontal" refer to a working configuration of the frame 1 for allowing supporting of the thermoformable sheet.

The frame 1 also comprises two side plates 19a and 19b lateral to the working window 2 and visible in Figure 1. The side plates 19a and 19b define the sides of the working window 2 perpendicular to the edge member 3 and are coplanar with the support surface of the edge member 3.

Sliding guides 20 are provided at two ends of the side plates, as can be seen in Figure 9. Two sliding lugs 21 are respectively provided at two ends of the first lateral sliding members 4b and 4c. The sliding lugs 21 are therefore inserted inside the respective sliding guides 20 so as to allow adjustment of the area of the working window 2 in a direction transverse to the length of the edge member 3. The sliding lugs 21 are preferably formed with a T-shaped cross-section. However, it is quite possible to use different types of sliding lugs 21 and, therefore, sliding guides 20 which are accordingly shaped.

Considering again Figure 1, in an opposite position to the edge member 3, the frame 1 furthermore comprises a second edge member 22 with fixed length. This second edge member 22 is adapted to obtain a configuration coplanar with the adjustable-length edge member 3 and with said side plates 19a, 19b.

The side plates 19a and 19b are slidable relative to the fixed edge 22 of the frame 1.

The length of the second edge member 22 is, in particular, equal to the maximum length which can be obtained for the adjustable-length edge member 3. Preferably, the second edge member 22, with a fixed length, is also spatially fixed and is generally located on the side where the operator intervention in the thermoforming process is provided, so as to ensure an optimum working position of the operator.

The overall system of the frame 1 comprising the edge member 3 and, consequently, the reduction plate 16 and the side plates 19a and 19b is preferably moved vertically by means of a pneumatic system which allows coplanar positioning thereof with respect to the second edge member 22 once the size of the working window 2 has been defined.

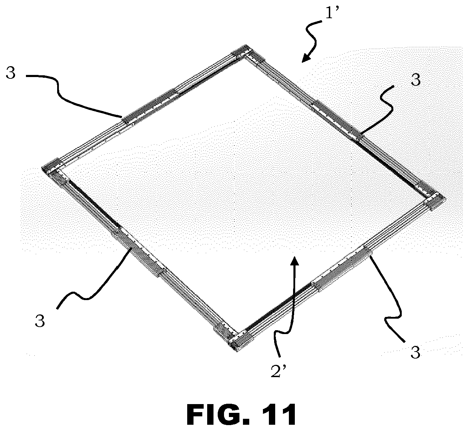

According to a second alternative embodiment of the invention, which can be seen in Figures 10 and 11, a frame 1' defining a working window 2' and composed of four edge members 3, adjustable lengthwise, is provided.

In Figure 10 the frame 1' is shown in a "closed" configuration, while in Figure 11 the frame 1' is shown in an "open" configuration. The terms "closed" and "open" have a meaning which is similar to that described above.

It is understood that the edge members 3 could comprise covering members similar to that described above, with reference to the first embodiment of the frame 1.

Figure 12 shows in schematic form a thermoforming machine 30 in which the frame 1 according to the present invention is incorporated.

The machine 30 has motor-driven means 27, for example electric motors, for adjusting the dimensions of the working window 2.

Moreover, it is possible to note the presence of a movable frame device 23 comprising at least one pair of panels which move towards and away from each other and which at least partially overlap the side plates 19a, 19b. This movable frame device 23, coplanar with the reduction plate 16, compresses underlying sealing elements (not shown in the figures) on at least the two side edges of the working window 2, thus ensuring a perfect vacuum seal during the sheet thermoforming process, whatever the adjusted length of the edge member 3 and, consequently, of the window 2.

The movement of this movable frame device 23 is performed preferably by pneumatic actuating means 24. Obviously, it is quite possible for similar actuating means, carried out for example by electric motors, to be used.

Advantageously, the movable frame device 23 is operated so as to be lifted, moved towards the side edges of the sheet to be thermoformed and then lowered, thus preventing any possible rubbing against the sealing elements, thus prolonging their working life.

Preferably, moreover, the movable frame device 23 is formed with at least one pair of panels made of composite material, for example reinforced-glass fiber, namely a fiberglass. The use of composite materials ensures a better heat resistance during the thermoforming operation.

Moreover, the use of composite materials ensures a lower overall weight of the movable frame device 23, such that a smaller amount of power may be used to move it, while obtaining a faster speed of movement.

The thermoforming system is also provided such that the actuating means 24 are used also for the vertical movement of the frame 1, as well as for the movable frame device 23. Such pneumatic actuating means 24 allow the edge member 3 and the two side plates 19a, 19b to be kept in a position slightly raised with respect to the second fixed edge member 22 during adjustment of the working window 2.

The actuating means 24 allow moreover the reduction plate 16 to be kept spaced from the edge member 3 and the movable frame device 23 to be kept spaced from the two side plates 19a, 19b so as to prevent any rubbing action of the plates against the aforementioned sealing elements, thereby preserving their working life and working efficiency.

The operating principle of the frame for a thermoforming machine according to the invention will described hereinbelow, considering, for illustrative purposes, the embodiments described above.

Initially, during adjustment of the dimensions of the working window 2, the actuating means 24 keep in a slightly raised position the edge member 3 and the side plates 19b with respect to the fixed edge 22 and the final thermoforming position. The actuating means moreover keep the reduction plate spaced from the edge member 3 and the movable frame device 23 spaced and slightly raised with respect to the two side plates 19a, 19b in order to prevent rubbing against the sealing elements.

Once the size of the sheet to be thermoformed has been determined, a corresponding area of the working window 2 is defined. The edge member 3 is consequently lengthened or shortened depending on the case in question, adjusting the depth of insertion of the blade inserts 8 and 8b inside the corresponding sliding grooves 7 and 7b.

The movement for dimensional adjustment of the working window 2 along the two planar dimensions is performed by means of the motors 27. Due to the connection between the first connection members 4b and 4c and the side plates 19a and 19b, a movement of the edge member is also transmitted to the side plates 19a and 19b.

At the same time, due to the size of the working window 2 also along the dimension perpendicular to the edge member 3, the sliding lugs 21 slide along the respective sliding guides 20. By means of the connection of the edge member 3 to the reduction plate 16, the movement of the sliding lugs 21 inside the sliding guides 20 is transmitted to the reduction plate 16 and there is a consequent reduction in the area of the working window 2.

Once the desired size of the working window 2 along the three sides defined by the edge member 3, and therefore the reduction plate 16, and the side plates 19a and 19b is obtained, the frame 1 is positioned, by the motor-driven means 24, in a configuration coplanar with the fixed-length edge member 22. In this way a complete flat configuration of the support surface of the frame 1, with the top abutting portion defined by the reduction plate 16, is obtained. This flat configuration is rendered continuous with the thermoformable sheet by means of the interposition of the covering member 33.

It is therefore possible to place the thermoformable sheet on the respective seals located on the edge of the working window 2, while the pneumatic actuating means 24 ensure that the movable frame device 23 partially overlapping the working window 2 and the edges of the thermoformable sheet, fixing it in a sealed manner. The conventional thermoforming operations are then performed.

These operations also involve heating the thermoformable sheet by means of heating plates 25 and a movable frame device. Later, deep drawing of the heated thermoformable sheet, together with the upward movement, by means of an additional pneumatic system, of a mold which is arranged in a special bottom cavity 26 and on which the thermoformable sheet is positioned, are carried out. The formation of the vacuum between sheet and mold and the subsequent cooling conclude the formation of the desired component.

The frame according to the present invention, therefore, allows to obtain a flat support surface for the sheet to be thermoformed, said surface being made, as mentioned, perfectly continuous by means of the covering element. In this way correct vacuum sealing during subsequent thermoforming of the said sheet is ensured.

A dimensional adjustment mechanism such as that described, moreover, allows to avoid subjecting the sealing elements located along the edge of the working window to frictional stress. This feature is such that these sealing elements may be subject only to compressive stresses as per the design specification, and not to frictional stresses, with an increase in the working life and a corresponding financial benefit in terms of management costs.

Furthermore, the frame allows dimensional adjustment of the working window within a wide range is possible. Moreover, within this range, adjustment may be performed in a more or less continuous manner, being adapted also to minimal dimensional differences between the sheets to be thermoformed.

The presence of a fixed-length and spatially immobile edge member and the movement only along three sides ensure that the operator may always assume an optimum working position opposite the working window.

Finally, a frame according to the invention is applicable to pre-existing systems. There are in fact no particular constraints which prevent adaptation of the frame, resulting in a high degree of practicality of use and a low impact in terms of cost whenever this is to be applied.

The person skilled in the art will understand that the embodiments described may be subject to various modifications and variations depending on specific requirements which may arise.

For example, it is quite possible to use different materials for the construction thereof. Moreover, it is possible to use a suitable number of sliding members depending on the specific adjustment needs.

Therefore, the description given here is to be understood as being purely illustrative and does not limit the scope of the invention.

## Claims

1. Frame for thermoforming machine, defining an adjustable-size working window (2) for a thermoformable sheet,
said frame (1) comprising at least one edge member (3),
said edge member (3) comprising:
at least one first sliding member (4, 4b, 4c) and
at least one second sliding member (5) sliding relative to said at least one first sliding member (4, 4b, 4c) so as to adjust a length of said edge member (3),
said edge member (3) having a support surface for said thermoformable sheet,
**characterized in that:**
said first sliding member (4, 4b, 4c) comprises a plurality of grooves (7, 7b) parallel to each other and aligned with respect to said length of said edge member (3),
said second sliding member (5) comprising a respective plurality of blade inserts (8, 8b) parallel to each other and aligned with respect to said length of said edge member (3),
said plurality of blade inserts (8, 8b) being respectively inserted slidably inside said plurality of grooves (7), in order to adjust said length of said edge member (3),
said plurality of grooves (7, 7b) and said plurality of blade inserts (8, 8b) defining a flat configuration of said support surface.

2. Frame for thermoforming machine according to claim 1, wherein a first height of said plurality of grooves (7) is substantially similar to a second height of said plurality of blade inserts (8) so as to create said flat configuration of said support surface.

3. Frame for thermoforming machine according to claim 1 or 2,
wherein said first sliding member (4) further comprises a second plurality of grooves (7b) alternating to said first plurality of grooves (7).
and wherein said edge member (3) further comprises a third sliding member (6) opposite to said second sliding member (5)
said third sliding member (6) comprising a second plurality of blade inserts (8b),
said second plurality of blade inserts (8b) being respectively inserted slidably inside said second plurality of grooves (7b), defining a double configuration for length adjustment of said edge member (3).

4. Frame for thermoforming machine according to any one of claims 1 to 3, further comprising
an alignment member (9) at a side wall (10) of one of said first sliding member (4, 4b, 4c) and said second sliding member (5) and
a respective housing (11) at a side wall (12) of the other one of said first sliding member (4) and said second sliding member (5),
said alignment member (9) being slidably inserted inside said respective housing (11) so as to constrain to bending said first sliding member (4, 4b, 4c) with respect to said second sliding member (5), in the direction of said length of said edge member (3).

5. Frame for thermoforming machine according to claim 4, wherein said alignment member (9) and said respective housing (11) are adapted to withstand bending/torsional stresses on said edge member (3).

6. Frame for thermoforming machine according to any one of claims 1 to 5, further comprising
at least one connection member (13a, 13b) connected to said at least one first sliding member (4),
said at least one connection member (13a, 13b) comprising
a vertical portion (13a), perpendicular with respect to said support surface, configured to abut with an edge of said thermoformable sheet.

7. Frame for thermoforming machine according to claim 6, wherein said frame (1) further comprises a reduction plate (16) for said working window (2), and
wherein said connection member (13) further comprises a horizontal portion (13b) connected to said reduction plate (16).

8. Frame for thermoforming machine according to claim 7,
wherein said horizontal portion (13b) comprises a sliding seat (18) in the direction of said length, and
wherein said reduction plate (16) comprises a respective projecting bar (19) in the direction of said length,
said projecting bar (19) being adapted to slide inside said sliding seat (18) for adjustment of said length of said edge member (3).

9. Frame for thermoforming machine according to any one of claims 1 to 8, further comprising two side plates (19a, 19b), lateral to said working window (2), defining the sides of said working window (2) perpendicular to said edge member (3) and coplanar with said support surface of said edge member (3).

10. Frame for thermoforming machine according to claim 9,
wherein said edge member further comprises at least two sliding lugs (21) at two ends of said edge member (3), and
wherein said side plates (19a, 19b) comprise at least two sliding guides (20) at two end edges of said side plates (19a, 19b),
wherein said at least two sliding lugs (21) are inserted inside said sliding guides (2), for adjustment of a dimension of said working window (2).

11. Frame for thermoforming machine according to claim 10, further comprising a second edge member (22) with fixed length, opposite to said edge member (3) with adjustable length,
said second edge member (22) being adapted to obtain a configuration coplanar with said adjustable-length edge member (3) and with said side plates (19a, 19b).

12. Frame for thermoforming machine according to any one of claims 1 to 8, wherein said frame (1') has four said edge members (3) adjustable lengthwise.

13. Frame for thermoforming machine according to any one of claims 1 to 12, wherein the edge member (3) further comprises a covering member (33) above said support surface, said covering member (33) being adapted to carry out a vacuum-tight seal with said thermoformable sheet.

14. Thermoforming machine having an adjustable-size working window (2) for a thermoformable sheet, wherein at least one edge member (3) of said window (2) has a variable length and forms a perimetral support surface for the thermoformable sheet; **characterized in that** said edge member (3) forms part of a frame (1) provided according with any one of the preceding claims.

15. Machine according to claim 14, **characterized by** comprising a movable frame device (23) with panels (29) operated by motor-driven means (23) towards and away from each other; said panels being operated so as to be raised, moved closer and then lowered onto at least the side edges of the thermoformable sheet.

16. Machine according to claim 15, **characterized in that** said panels (29) are made of a composite material.

17. Method for adjusting the dimensions of a working window (2) of a frame (1) for a thermoforming machine operating with thermoformable sheets, wherein the frame (1) comprises at least one edge member (3) of said window (3) with a variable length and having a perimetral support surface for the thermoformable sheets, **characterized in that** it provides a telescopic extension or contraction of said edge member (3) by means of at least one coupling between a plurality of grooves (7, 7b), which are parallel to each other, of a first sliding member of said edge member (3) and a respective plurality of blade inserts (8, 8b) respectively inserted slidably inside said plurality of grooves (7), in order to adjust said length of said edge member (3) defining a flat configuration of said support surface.

18. Method according to Claim 15, wherein two side plates (19a, 19b) defining the sides of said working window (2) perpendicular to said edge member (3) and coplanar with said support surface of said edge member (3) are provided; said plates being partially overlapped by a movable frame device (23) with composite-material panels (29), operated by motor-driven means (24) towards and away from each other; said panels (29) being operated so as to be raised, moved closer and then lowered onto at least the side edges of the thermoformable sheet.
